# EUROPÄISCHE PATENTSCHRIFT

(11) **EP 3 024 902 B1**
(45) Veröffentlichungstag und Bekanntmachung des Hinweises auf die Patenterteilung: **11.09.2019**
(21) Anmeldenummer: 14749734.1
(22) Anmeldetag: 22.07.2014
(51) Int. Cl.: C09J 4/00, C08F 220/38, C08F 222/18, C09J 133/14, C09J 133/16, C08F 220/10

(54) **TRANSPARENTER KLEBSTOFF MIT EINEM BRECHUNGSINDEX IM BEREICH VON 1,7 BIS 1,73**
TRANSPARENT ADHESIVE WITH A REFRACTIVE INDEX RANGING FROM 1.7 TO 1.73
COLLE TRANSPARENTE AYANT UN INDICE DE RÉFRACTION COMPRIS ENTRE 1,7 ET 1,73

(30) Priorität: 22.07.2013 DE 102013214272; 04.12.2013 DE 102013224907
(43) Veröffentlichungstag der Anmeldung: 01.06.2016
(73) Patentinhaber: CeramTec-Etec GmbH, 53797 Lohmar (DE)
(72) Erfinder: KLEMM, Elisabeth, 99425 Weimar (DE); TITTEL, Martin, 99438 Bad Berka (DE)
(86) Internationale Anmeldenummer: PCT/EP2014/065737
(87) Internationale Veröffentlichungsnummer: WO 2015/011147

(56) Entgegenhaltungen:
- WO-A2-01/42382
- DE-A1-102011 014 100
- JP-A- 2004 269 814
- US-A- 4 606 864
- US-A- 4 654 431
- US-A- 5 741 831
- US-A1- 2006 205 835

## Beschreibung

Gegenstand der vorliegenden Erfindung gemäß Ansprüche 1 bis 15 ist ein transparenter Klebstoff mit einem Brechungsindex im Bereich von 1,7 bis 1,73, dessen Herstellung und Verwendung insbesondere dessen Verwendung für Beschichtungen und Verklebungen.

Aus der US 2006/205835 A1 ist eine transparente Acrylathaftklebemasse bekannt, die einen Füllstoff umfasst. Die Acrylathaftklebemasse enthält ein Polyacrylat und Silicat- und/oder Kieselgel-Partikel. Die Silicat- und/oder Kieselgel-Partikel weisen dabei eine Grösse von maximal 50 nm auf.

Die US 4 606 864 A offenbart Thiophenyl-Thioacrylate oder Thiophenyl-Thiomethacrylate und Polymere daraus. Diese transparenten Polymere können insbesondere in optischen Komponenten eingesetzt werden.

In der US 4 654 431 A werden ebenfalls Thioacrylat-Monomere einer bestimmten Summenformel offenbart, wobei die daraus hergestellten Polymere ebenso für optische Komponenten eingesetzt werden können.

Ähnliche Monomere werden auch in der US 5 741 831 A offenbart, wo polymerisierbare Zusammensetzungen auf Basis von Thio(meth)acrylatmonomeren beschrieben sind. Die daraus hergestellten Polymere lassen sich ebenso für optische Komponenten, beispielsweise Linsen verwenden.

Die JP 2004 269814 A beschreibt polymerisierbare Verbindungen und polymerisierbare Zusammensetzungen, die Thioacrylate enthalten können. Die Zusammensetzungen enthalten mindestens zwei verschiedene polymerisierbare Verbindungen.

Die WO 01/42382 A2 offenbart zudem Polymere mit Thioether-Struktureinheiten, die zur Herstellung von Beschichtungen und Verklebungen verwendet werden können. Die Beschichtungen können zu schützenden oder dekorativen Zwecken auf Glas, Kunststoffen und Metallen verwendet werden.

Aus der DE 10 2011 014 100 A1 ist ein transparentes Schutzsystem bekannt, das mindestens ein Bauteil aus einem Einkristall oder aus einer polykristallinen Keramik aufweist und eine RIT > 10% besitzt, wobei es in besonders vorteilhafter Weise nicht zwangsläufig erforderlich ist, die Einkristalle oder die Keramik zu polieren, so dass die aus einem solchen Poliervorgang resultierenden Herstellungskosten eliminiert sind.

Im Idealfall kann gemäß DE 10 2011 014 100 A1 auch ein vor dem Polieren durchzuführender Schleifvorgang entfallen und das mindestens eine Bauteil aus Keramik oder Einkristall unmittelbar nach seiner Herstellung verwendet mit einem Matrixmaterial kombiniert werden. Wenn das Matrixmaterial zumindest annähernd den gleichen Brechungsindex bzw. den gleichen Brechungsindex wie das mindestens eine Bauteil aufweist, wird in vorteilhafter Weise jeder optische Fehler der Oberfläche des mindestens einen Bauteils ausgeglichen, so dass bspw. eine schlechte Polierqualität akzeptiert werden kann, bzw. das mindestens eine Bauteil nicht geschliffen und poliert zu werden braucht.

Erfindungsgemäß ist der transparente Klebstoff einer mit einem Brechungsindex im Bereich von 1,7 bis 1,73 (633 nm) auf Basis von Thioacrylate der allgemeinen Formel 1 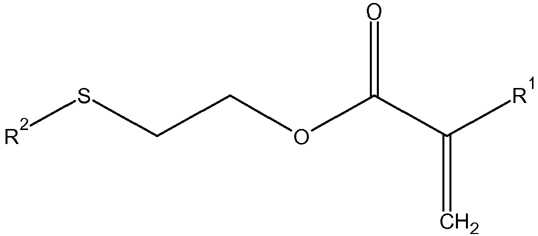
R¹ = H, CH₃
R²= C₆,H₅, 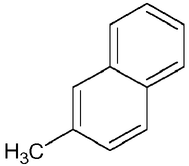
und einem Polymerisationsinitiator.

Vorzugsweise enthält der Klebstoff Pentabromphenylmethacrylat der allgemeinen Formel 2 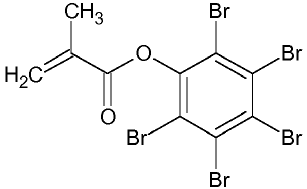 als Comonomer in einer Menge von 0 bis 20 Gew.-%.

Weiterhin bevorzugt enthält der Klebstoff Bisacrylaten der allgemeinen Formel 3 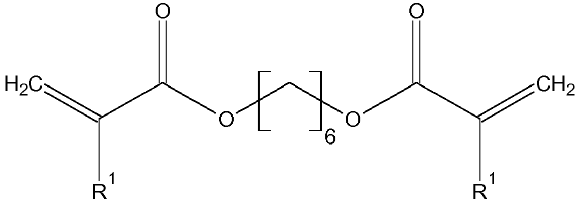 als Vernetzer in einer Menge von 0 bis 5,0 Gew.-%.

Vorzugsweise enthält der Klebstoff als Polymerisationsinitiator einen Photoinitiator in einer Menge von 2,0 bis 5,0 Gew.-% bevorzugt 2,0 bis 3,0 Gew.-%. Bevorzugt ist der Photoinitiatoren, ausgewählt aus der Gruppe bestehend aus Hydroxyketonen, Monoacylphosphinen, Bisacylphosphinen und/oder Benzoylderivaten. Ganz besonders bevorzugt ist als Photoinitiato¬ren im erfindungsgemäßen Klebstoff 1-Hydroxy-cyclohexylphenylketon, 2,4,6-Trimethylbenzoylbisphenylphos¬phinoxid, Bis(2,4,6-trimethylbenzoyl)¬phosphin-oxid oder 2-Hydroxy-2-methyl-1-phenyl-propanon enthalten.

Weiterhin enthält der Klebstoff anorganische, nanoteilige Partikel ausgewählt aus der Gruppe bestehend aus Metalloxiden in einer Menge von 0 bis 12 Gew.-%, vorzugsweise Oxide der Elemente Aluminium, Zink oder Titan und besonders bevorzugt enthält der erfindungsgemäße Klebstoff Zinkoxid in einer Menge von 0 bis 12 Gew.-%. Unter nanoteiligen Partikeln werden im Sinne dieser Anmeldung Partikel mit einer Partikelgröße von 1 bis 150 nm verstanden, bestimmt durch dynamische Lichtstreuung (DLS) mit Hilfe von Laserstrahlbeugung gemäß der DIN ISO Norm 13320-1.

Das erfindungsgemäße Verfahren zur Herstellung eines transparenten Klebstoffs erfolgt in der Weise, dass ein Thioacrylate der allgemeinen Formel 1 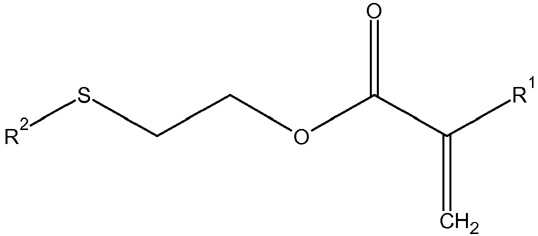
R¹ = H, CH₃
R²= C₆,H₅, 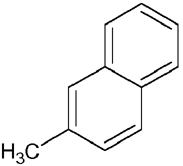
und einem Polymerisationsinitiator gemischt und gehärtet werden. Vorzugsweise wird der Photoinitiator in einer Menge von 2,0 bis 5,0 Gew.-% bevorzugt 2,0 bis 3,0 Gew.-% zugesetzt. Der Photoinitiatoren wird ausgewählt aus der Gruppe bestehend aus Hydroxyketonen, Monoacylphosphinen, Bisacylphosphinen und/oder Benzoylderivaten. Ganz besonders bevorzugt wird als Photoinitiato¬r im erfindungsgemäßen Klebstoff 1-Hydroxy-cyclohexylphenylketon, 2,4,6-Trimethylbenzoylbisphenylphos¬phinoxid, Bis(2,4,6-trimethylbenzoyl)¬phosphin-oxid oder 2-Hydroxy-2-methyl-1-phenyl-propanon eingesetzt. Die Härtung erfolgt vorzugsweise durch aktinische Strahlung, besonders bevorzugt durch Bestrahlung mit einer UVA-Lampe bei einer Strahlungsintensität zwischen 10 mW/cm² und 40 mW/cm².

Vorzugsweise werden beim erfindungsgemäßen Verfahren Pentabromphenylmethacrylat der allgemeinen Formel 2 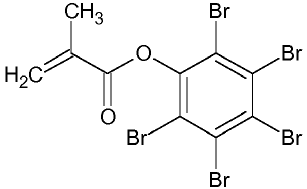 in einer Menge von 0 bis 20 Gew.-% und/oder ein Bisacrylat der allgemeinen Formel 3 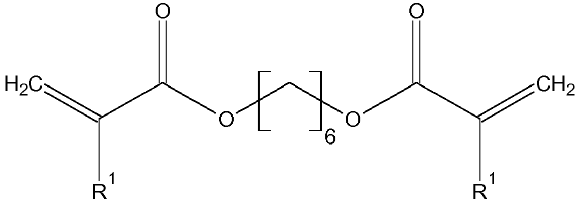 in einer Menge von 0 bis 5 Gew.-% zugesetzt.

Vorteilhafter Weise werden der Klebstoffmasse noch anorganische, nanoteilige Partikel ausgewählt aus der Gruppe bestehend aus Metalloxiden der Elemente Aluminium, Zink oder Titan und besonders bevorzugt Zinkoxid in einer Menge von 0 bis 12 Gew.-% zugesetzt. Die anorganischen, nanoteiligen Partikel werden im erfindungsgemäßen Verfahren vorzugsweise als Dispersion in Ethanol und/oder Isopropanol der Klebstoffmasse zugesetzt.

Überaschenderweise hat sich gezeigt, dass durch die Einbettung von Keramiken oder Einkristallen, die unpoliert bzw. ggf. nicht nur unpoliert sondern auch ungeschliffen sein können, in ein aus dem erfindungsgemäßen Klebstoff bestehenden Matrixmaterial, dessen Brechungsindex dem Brechungsindex der Keramik oder des Einkristalls mindestens annähernd, d.h. in einem Bereich von ±10% entspricht, ein transparentes Schutzsystem realisiert werden kann, das auf eine preisgünstige Art und Weise auch eine komplexe Geometrie des Schutzsystems ermöglicht.

Der gemäß vorliegender Erfindung bereitgestellte Klebstoff ist nun in besonderer Weise geeignet, als Matrixmaterial im Sinne der DE 10 2011 014 100 A1 eingesetzt zu werden. Mit ihm ist es überraschenderweise möglich, einen in weiten Bereichen variablen optischen Brechungsindex n_{B} einzustellen. Der bevorzugte erfindungsgemäße Klebstoff weist einen optischen Brechungsindex n_{B} von > 1,7 auf.

Durch die Verwendung des erfindungsgemäßen Klebstoffs mit einem optischen Brechungsindex, der an dem des mindestens einen Bauteils wunschgemäß angepasst ist, verschwinden die optischen Grenzen zu dem mindestens einen Bauteil aus polykristallinem Keramikmaterial oder aus Einkristall. Damit stellt nur noch der erfindungsgemäße Klebstoff selbst die Grenze zur Umgebung dar, an der es zu einer Reflexion und/oder Brechung kommen kann. In Kombination beispielsweise mit Glas- oder anderen Scheiben ist dann in einem entsprechenden Verbund nur noch die äußerste Lage relevant.

In besonders vorteilhafter Weise kann der erfindungsgemäße Klebstoff verwendet werden zur Herstellung von transparenten Ballistik-Schutzsystemen, von strahlverschleißresistenten Sichtfenstern für Strahlkabinen, von Fenstern für spanende Anlagen (kratzbeständig und hoch fest), von transparenten architektonischen Elementen, von transparenten Bestandteilen im Schmuckbereich, wie beispielsweise von Zifferblatt-Gläsern in Armbanduhren, von Chemiefenstern mit hoher Beständigkeit gegen Säuren und Laugen und/oder von Fenstern für Messsensoren.

Die Erfindung wird nachfolgen an Hand von Beispielen näher erläutert ohne das dadurch der Schutzbereich nur auf die beispielhaft dargestellten Gegenstände beschränkt ist.

### Beispiel 1

In einem Reaktionsgefäß werden unter Ausschluss von Feuchtigkeit 20 g Pentabromphenylmethacrylat in 200 ml Essigester unter Rühren gelöst. Anschließend werden unter ständigem Rühren 80 g 2-Naphthalinthioethylacrylat und 2,0 g 2-Hydroxy-2-methyl-1-phenyl-propan-1- on als Initiator hinzu gefügt. Die leicht viskose Lösung besitzt eine hellbraune Farbe und ist für Verklebungen und Beschichtungen einsatzfähig.

### Beispiel 2

In die nach Beispiel 1 hergestellte Lösung werden in einem Reaktionsgefäß unter Feuchtigkeitsausschluss 10,0 g einer ethanolischen Nano-Zinkoxid-Dispersion, 40 Gew.-% in Ethanol, ≤ 130 nm Partikelgröße bestimmt durch dynamische Lichtstreuung (DLS) Dichte= 1,2 - 1,3 g/cm³ hinzugefügt. Es wird einige Zeit gut durchgerührt und eine braune stabile Dispersion erhalten. Nach Entfernen des Lösungsmittelgemischs ist der Klebstoff einsatzfähig.

### Viskosität: 350 mPas

Die Härtung erfolgt mit einer UV A-Lampe, die eine Strahlungsintensität von mindestens 10 mW/cm² besitzt. Die Bestrahlungszeit richtet sich nach der Dicke der zu fügenden Glas-/Keramik-Teile und beträgt in der Regel 5 Minuten. Man erhält eine transparente farblose Klebefuge. Die gefügten Teile zeigen eine hohe Klimastabilität und sind auch im feuchtwarmen Wechselklima stabil.

Die gefügten Teile sind bis 170° C unverändert fest verbunden.
n= 1,72 (633 nm)
Scherfestigkeit: 6,4 N/mm²

### Beispiel 3

In einem Reaktionsgefäß werden unter Feuchtigkeitsausschluss 100 g 2-Naphthalinthioethylacrylat mit 2,0g 2-Hydroxy-2-methyl-1-phenyl-propan-1- on unter Rühren homogen vermischt Die leicht gelbe Lösung ist für Beschichtungen bzw. als Klebstoff einsatzfähig.

### Beispiel 4

In die nach Beispiel 3 hergestellte Klebstofflösung werden in einem Reaktionsgefäß unter Feuchtigkeitsausschluss 15,0 g einer ethanolischen Nano-Zinkoxid Dispersion, Sigma Aldrich 40 Gew.-% in Ethanol, ≤ 130 nm Partikelgröße bestimmt durch DLS, Dichte= 1,2 - 1,3 g/cm³ hinzugefügt. Man rührt einige Zeit gut durch und erhält eine hellbraune stabile Dispersion. Nach Entfernen des Lösungsmittelgemischs ist der Klebstoff einsatzfähig.

### Viskosität: 300 mPas

Die Härtung erfolgt mit einer UV A-Lampe, die eine Strahlungsintensität von mindestens 10 mW /cm² besitzt. Die Bestrahlungszeit richtet sich nach der Dicke der zu fügenden Glas-/Keramik-Teile und beträgt in der Regel 5 Minuten. Man erhält eine transparente farblose Klebefuge. Die gefügten Teile zeigen eine hohe Klimastabilität und sind auch im feuchtwarmen Wechselklima stabil.

Die gefügten Teile sind bis 170° C unverändert fest verbunden.
n= 1,72 (633 nm)
Scherfestigkeit: 11,8 N/mm²

## Patentansprüche

1. Transparenter Klebstoff mit einem Brechungsindex im Bereich von 1,7 bis 1,73 (633 nm) auf Basis von Thioacrylate der allgemeinen Formel 1 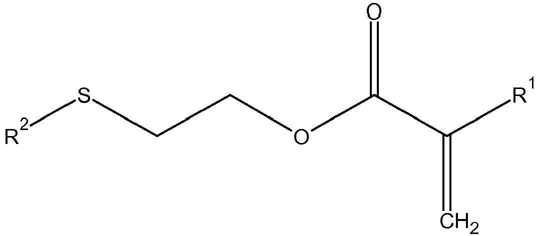
R¹ = H, CH₃
R²= C₆,H₅, 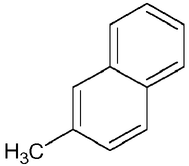
und einem Polymerisationsinitiator.

2. Klebstoff nach Anspruch 1, **dadurch gekennzeichnet, dass** er Pentabromphenylmethacrylat der allgemeinen Formel 2 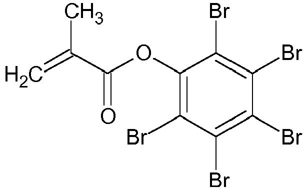 als Comonomer in einer Menge von 0 bis 20 Gew.-% enthält.

3. Klebstoff nach Anspruch 1 oder 2, **dadurch gekennzeichnet, dass** er Bisacrylaten der allgemeinen Formel 3 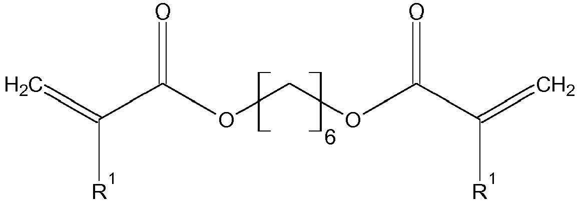 als Vernetzer in einer Menge von 0 bis 5,0 Gew.-% enthält.

4. Klebstoff nach einem der Ansprüche 1 bis 3, **dadurch gekennzeichnet, dass** er als Polymerisationsinitiator einen Photoinitiator in einer Menge von 2,0 bis 5,0 Gew.-% enthält.

5. Klebstoff nach einem der Ansprüche 1 bis 4, **dadurch gekennzeichnet, dass** der Photoinitiator, ausgewählt ist aus der Gruppe bestehend aus Hydroxyketonen, Monoacylphosphinen, Bisacylphosphinen und/oder Benzoylderivaten.

6. Klebstoff nach Anspruch 5, **dadurch gekennzeichnet, dass** als Photoinitiator 1-Hydroxy-cyclohexylphenylketon, 2,4,6-Trimethylbenzoylbisphenylphosphinoxid, Bis(2,4,6-trimethylbenzoyl)¬phosphinoxid oder 2-Hydroxy-2-methyl-1-phenylpropanon enthalten ist.

7. Klebstoff nach einem der Ansprüche 1 bis 6, **dadurch gekennzeichnet, dass** er anorganische, nanoteilige Partikel ausgewählt aus der Gruppe bestehend aus Metalloxiden in einer Menge von 0 bis12 Gew.-% enthält.

8. Klebstoff nach Anspruch 7, **dadurch gekennzeichnet, dass** er Oxide der Elemente Aluminium, Zink oder Titan enthält.

9. Klebstoff nach Anspruch 8, **dadurch gekennzeichnet, dass** er Zinkoxid in einer Menge von 0 bis 12 Gew.-% enthält.

10. Verfahren zur Herstellung eines transparenten Klebstoffs gemäß einem der Ansprüche 1 bis 9, **dadurch gekennzeichnet, dass** ein Thioacrylate der allgemeinen Formel 1 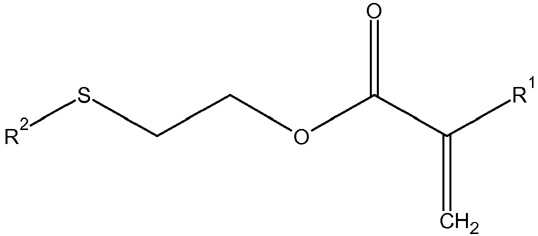
R¹ = H, CH₃
R²= C₆,H₅, 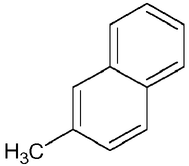
und einem Polymerisationsinitiator gemischt und gehärtet werden.

11. Verfahren nach Anspruch 10, **dadurch gekennzeichnet, dass** Pentabromphenylmethacrylat der allgemeinen Formel 2 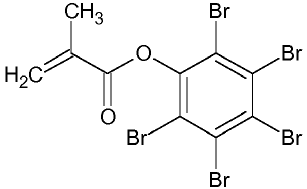 in einer Menge von 0 bis 20 Gew.-% und/oder ein Bisacrylat der allgemeinen Formel 3 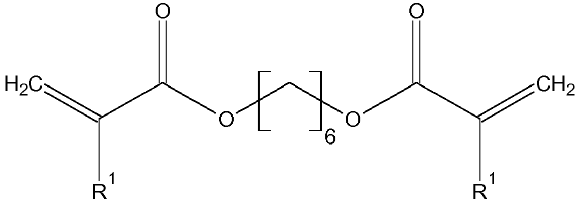 in einer Menge von 0 bis 5 Gew.-% zugesetzt werden.

12. Verfahren nach Anspruch 10 oder 11, **dadurch gekennzeichnet, dass** anorganische, nanoteilige Partikel ausgewählt aus der Gruppe bestehend aus Metalloxiden in einer Menge von 0 bis 12 Gew.-% zugesetzt werden.

13. Verfahren nach Anspruch 12, **dadurch gekennzeichnet, dass** die anorganische, nanoteilige Partikel als Dispersion in Ethanol und/oder Isopropanol zugesetzt werden.

14. Verwendung eines transparenten Klebstoffs gemäß einem oder mehreren der vorhergehenden Ansprüche für Beschichtungen oder Verklebungen.

15. Verwendung eines transparenten Klebstoffs gemäß einem oder mehreren der vorhergehenden Ansprüche zur Herstellung von transparenten Ballistik-Schutzsystemen, von strahlverschleißresistenten Sichtfenstern für Strahlkabinen, von Fenstern für spanende Anlagen (kratzbeständig und hoch fest), von transparenten architektonischen Elementen, von transparenten Bestandteilen im Schmuckbereich, wie beispielsweise von Zifferblatt-Gläsern in Armbanduhren, von Chemiefenstern mit hoher Beständigkeit gegen Säuren und Laugen und/oder von Fenstern für Messsensoren.

## Claims

1. Transparent adhesive having a refractive index in the range of from 1.7 to 1.73 (633 nm) based on thioacrylates of general formula 1 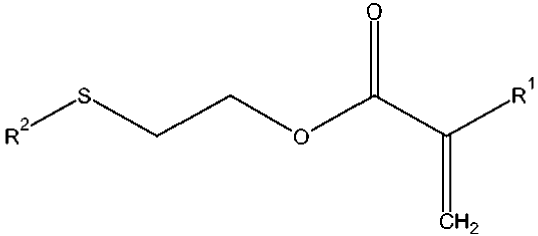
R¹ = H, CH₃
R²= C₆,H₅, 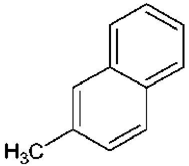
and a polymerization initiator.

2. Adhesive according to claim 1, **characterized in that** it contains pentabromophenyl methacrylate of general formula 2 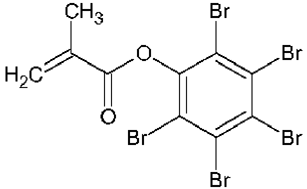 as a comonomer in an amount of from 0 to 20 wt.%.

3. Adhesive according to either claim 1 or claim 2, **characterized in that** it contains bisacrylates of general formula 3 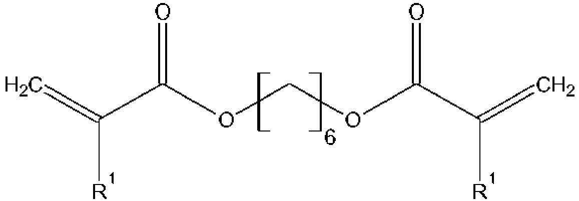 as a crosslinking agent in an amount of from 0 to 5.0 wt.%.

4. Adhesive according to any of claims 1 to 3, **characterized in that** it contains a photoinitiator as the polymerization initiator in an amount of from 2.0 to 5.0 wt.%.

5. Adhesive according to any of claims 1 to 4, **characterized in that** the photoinitiator is selected from the group consisting of hydroxy ketones, monoacyl phosphines, bisacyl phosphines and/or benzoyl derivatives.

6. Adhesive according to claim 5, **characterized in that** 1-hydroxy-cyclohexyl phenyl ketone, 2,4,6-trimethylbenzoylbisphenyl phosphine oxide, bis(2,4,6-trimethylbenzoyl)phosphine oxide or 2-hydroxy-2-methyl-1-phenylpropanone is contained as the photoinitiator.

7. Adhesive according to any of claims 1 to 6, **characterized in that** it contains inorganic nanoparticulate particles selected from the group consisting of metal oxides in an amount of from 0 to 12 wt.%.

8. Adhesive according to claim 7, **characterized in that** it contains oxides of the elements aluminum, zinc or titanium.

9. Adhesive according to claim 8, **characterized in that** it contains zinc oxide in an amount of from 0 to 12 wt.%.

10. Method for preparing a transparent adhesive according to any of claims 1 to 9, **characterized in that** a thioacrylate of general formula 1 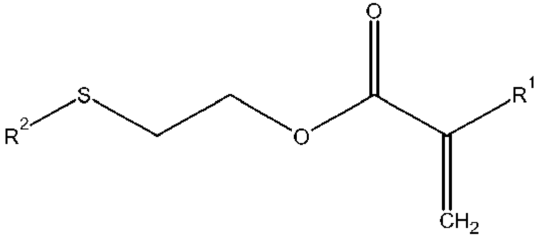
R¹ = H, CH₃
R² = C₆,H₅, 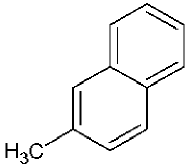
and a polymerization initiator are mixed and cured.

11. Method according to claim 10, **characterized in that** pentabromophenyl methacrylate of general formula 2 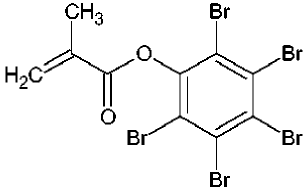 in an amount of from 0 to 20 wt.% and/or a bisacrylate of general formula 3 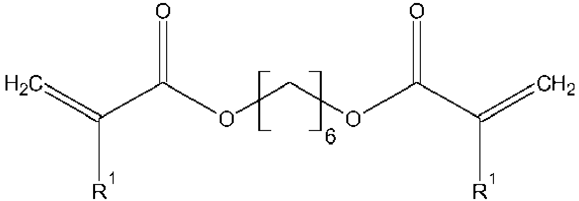 in an amount of from 0 to 5 wt.% are added.

12. Method according to either claim 10 or claim 11, **characterized in that** inorganic nanoparticulate particles selected from the group consisting of metal oxides are added in an amount of from 0 to 12 wt.%.

13. Method according to claim 12, **characterized in that** the inorganic nanoparticulate particles are added as a dispersion in ethanol and/or isopropanol.

14. Use of a transparent adhesive according to one or more of the preceding claims for coatings or adhesive bonds.

15. Use of a transparent adhesive according to one or more of the preceding claims for producing transparent ballistic protection systems, blast wear-resistant viewing windows for blasting cabinets, windows for machining installations (scratch-resistant and high-strength), transparent architectural elements, transparent components in the jewelry sector, such as dial glasses in wristwatches, chemical windows having high resistance to acids and alkalis and/or windows for measuring sensors.

## Revendications

1. Adhésif transparent ayant un indice de réfraction compris entre 1,7 et 1,73 (633 nm) sur la base de thioacrylates de formule générale 1 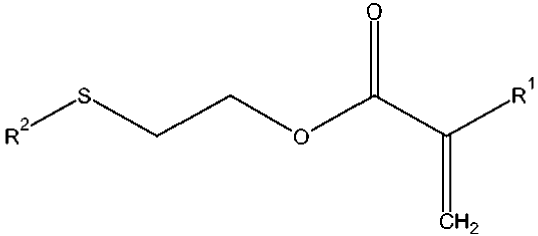
R¹ = H, CH₃
R²= C₆,H₅, 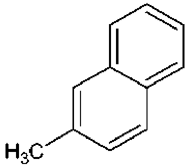
et d'un initiateur de polymérisation.

2. Adhésif selon la revendication 1, **caractérisé en ce qu'**il contient du pentabromophényl méthacrylate de formule générale 2 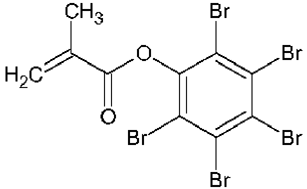 comme comonomère en une quantité comprise entre 0 et 20 % en poids.

3. Adhésif selon la revendication 1 ou 2, **caractérisé en ce qu'**il contient des bisacrylates de formule générale 3 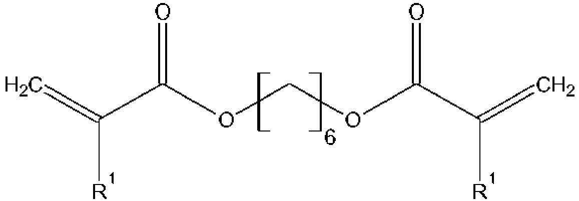 comme agent de réticulation en une quantité comprise entre 0 et 5,0 % en poids.

4. Adhésif selon l'une des revendications 1 à 3, **caractérisé en ce qu'**il contient comme initiateur de polymérisation un photoinitiateur en une quantité comprise entre 2,0 et 5,0 % en poids.

5. Adhésif selon l'une des revendications 1 à 4, **caractérisé en ce que** le photoinitiateur est choisi dans le groupe constitué par les hydroxycétones, les monoacylphosphines, les bisacylphosphines et/ou les dérivés de benzoyle.

6. Adhésif selon la revendication 5, **caractérisé en ce que** la 1-hydroxy-cyclohexylphénylcétone, le 2,4,6-triméthylbenzoylbisphénylphosphineoxyde, le bis(2,4,6-triméthylbenzoyl)-phosphineoxyde ou la 2-hydroxy-2-méthyl-1-phénylpropanone sont présents comme photoinitiateur.

7. Adhésif selon l'une des revendications 1 à 6, **caractérisé en ce qu'**il contient des nanoparticules inorganiques choisies dans le groupe constitué des oxydes métalliques en une quantité comprise entre 0 et 12 % en poids.

8. Adhésif selon la revendication 7, **caractérisé en ce qu'**il contient des oxydes des éléments aluminium, zinc ou titane.

9. Adhésif selon la revendication 8, **caractérisé en ce qu'**il contient de l'oxyde de zinc en une quantité comprise entre 0 et 12 % en poids.

10. Procédé de préparation d'un adhésif transparent selon l'une des revendications 1 à 9, **caractérisé en ce qu'**un thioacrylate de formule générale 1 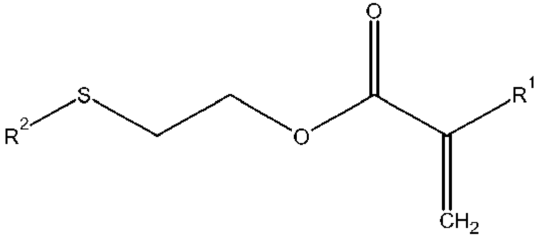
R¹ = H, CH₃
R²= C₆,H₅, 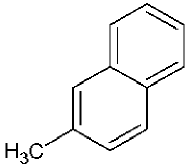
et un initiateur de polymérisation sont mélangés et durcis.

11. Procédé selon la revendication 10, **caractérisé en ce que** du pentabromophényl méthacrylate de formule générale 2 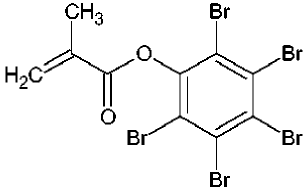 en une quantité comprise entre 0 et 20 % en poids et/ou un bisacrylate de formule générale 3 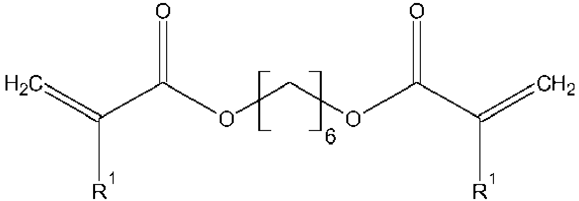 en une quantité comprise entre 0 et 5 % en poids sont ajoutés.

12. Procédé selon la revendication 10 ou 11, **caractérisé en ce que** des nanoparticules inorganiques choisies dans le groupe constitué par les oxydes métalliques sont ajoutées en une quantité comprise entre 0 et 12 % en poids.

13. Procédé selon la revendication 12, **caractérisé en ce que** des nanoparticules inorganiques sont ajoutées sous forme de dispersion dans l'éthanol et/ou l'isopropanol.

14. Utilisation d'un adhésif transparent selon une ou plusieurs des revendications précédentes pour des revêtements ou des collages.

15. Utilisation d'un adhésif transparent selon une ou plusieurs des revendications précédentes pour la fabrication de systèmes de protection balistique transparents, de fenêtres de visualisation résistant à l'usure par grenaillage pour cabines de sablage, de fenêtres pour installations de découpe (résistant aux rayures et à haute résistance mécanique), d'éléments architecturaux transparents, de composants transparents dans le secteur bijouterie, notamment des verres pour montres, de fenêtres chimiques à haute résistance aux acides et bases et/ou de fenêtres pour capteurs de mesure.
